# FASCICULE DE BREVET EUROPEEN

(11) **EP 4 513 221 B1**
(45) Date de publication et mention de la délivrance du brevet: **14.10.2026**
(21) Numéro de dépôt: 24195398.3
(22) Date de dépôt: 20.08.2024
(51) Int. Cl.: G01S 5/02

(54) **PROCÉDÉ ET MODULE DE CLASSIFICATION D'UNE LIAISON DE COMMUNICATION RADIOFRÉQUENCE, EN LIAISON DIRECTE OU INDIRECTE**
VERFAHREN UND MODUL ZUR KLASSIFIZIERUNG EINER FUNKKOMMUNIKATIONSVERBINDUNG IN DIREKTER ODER INDIREKTER VERBINDUNG
METHOD AND MODULE FOR CLASSIFYING A RADIO FREQUENCY COMMUNICATION LINK, IN DIRECT OR INDIRECT LINK

(30) Priorité: 21.08.2023 FR 2308815
(43) Date de publication de la demande: 26.02.2025
(73) Titulaire: Commissariat à l'Energie Atomique et aux Energies Alternatives, 75015 Paris (FR)
(72) Inventeur: DEPARIS, Nicolas, 38054 GRENOBLE CEDEX 9 (FR)
(74) Mandataire: Lavoix

(56) Documents cités:
- EP-B1- 1 610 258
- WO-A1-2022/164506
- US-A1- 2021 099 989

## Description

La présente invention concerne un procédé de classification d'une liaison de communication radiofréquence, en liaison directe ou en liaison indirecte, entre un premier dispositif de communication radiofréquence et un deuxième dispositif de communication radiofréquence.

L'invention concerne également un programme d'ordinateur comportant des instructions logicielles qui, lorsqu'elles sont exécutées par un ordinateur, mettent en œuvre un tel procédé de classification d'une liaison de communication radiofréquence, en liaison directe ou en liaison indirecte.

L'invention concerne également un module électronique de classification d'une liaison de communication radiofréquence, en liaison directe ou en liaison indirecte, entre un premier dispositif de communication radiofréquence et un deuxième dispositif de communication radiofréquence.

L'invention concerne également un dispositif de communication radiofréquence.

L'invention concerne également un système de localisation de dispositifs de communication radiofréquence.

La présente invention concerne le domaine de la géolocalisation de dispositifs communicants par liaison radiofréquence.

Le document US 2021/099989 divulgue notamment des dispositifs de communication et des procédés correspondants pour une communication RF et une détermination de position.

Dans ce domaine la présence de trajets multiples dans le canal de propagation est problématique car propre à introduire des aberrations (ou encore biais) sur l'estimé du temps de vol ToF (de l'anglais *Time Of Flight*) entre deux dispositifs communicants, par exemple entre un dispositif communicant, dont la position est fixe, dit ancre, et un dispositif communicant, dont la position est fixe ou propre à varier, appelé marqueur ou étiquette (de l'anglais *tag*).

Plus précisément, lorsqu'un obstacle ne permet pas une transmission de signal selon une liaison (i.e. trajet) directe LoS (de l'anglais *Line Of Sight*) d'échange entre deux dispositifs communicants, et qu'une transmission de signal selon une liaison indirecte NLOS (de l'anglais *Non Line Of Sight*) présente une puissance suffisante pour être détectée la localisation conjointe des dispositifs communicants va prendre en compte une distance présentant un biais, et estimer une position nommée fantôme du dispositif émetteur par le dispositif récepteur.

En effet, à partir de l'estimé du temps de vol, l'estimé de la distance inter-dispositif revient à diviser le temps de vol par la vitesse de propagation de l'onde radio dans son milieu de propagation, par exemple l'air. Une aberration sur l'estimé de temps de vol conduit alors à une aberration sur l'estimé de la distance et en conséquence à la localisation d'un dispositif « fantôme » émetteur. Autrement dit, de telles aberrations conduisent, en termes de localisation, à des erreurs sur la position des dispositifs communicants, et en particulier du dispositif communicant propre à être mobile et appelé tag.

Le document WO 2018 183571 A1 divulgue une solution de classification basée sur la nécessité d'avoir au moins trois dispositifs communicants et la mise en œuvre de triangulation/trilatération associée.

A titre d'alternative, Y. Ma et al. décrit dans l'article intitulé « An Indoor Localization Method Based on AoA and PDOA Using Virtual stations in Multipath and NLOS environments for Passive UHF RFID » une solution nécessitant une structure antennaire rayonnante complexe composée de plusieurs éléments en réseau devant être contrôlés indépendamment.

Le but de l'invention est alors de proposer une solution de classification d'une liaison de communication entre deux dispositifs communicants afin d'améliorer la localisation conjointe de ces deux dispositifs communicants, tout en s'affranchissant des contraintes précitées de l'état de la technique.

A cet effet, l'invention a pour objet un procédé de classification d'une liaison de communication radiofréquence, en liaison directe ou en liaison indirecte, entre un premier dispositif de communication radiofréquence et un deuxième dispositif de communication radiofréquence,
chacun desdits premier et deuxième dispositifs comprenant au moins deux antennes radiofréquence et un outil d'obtention d'un vecteur d'angle d'arrivée caractérisant un signal radiofréquence reçu,
ledit procédé étant mis en œuvre au sein d'un système de localisation de dispositifs de communication radiofréquence comprenant au moins ledit premier dispositif de communication radiofréquence, ledit deuxième dispositif de communication radiofréquence, et au moins un module électronique de classification de liaison de communication radiofréquence,
ledit procédé comprenant les étapes suivantes :
   - obtention de l'orientation de chaque antenne dudit premier dispositif de communication radiofréquence, et de l'orientation de chaque antenne dudit deuxième dispositif de communication radiofréquence, chaque orientation étant exprimée dans un référentiel commun auxdits premier et deuxième dispositifs de communication radiofréquence ;
   - obtention d'un premier vecteur d'angle d'arrivée caractérisant le signal reçu par le premier dispositif et transmis selon ladite liaison à classifier par le deuxième dispositif, et d'un deuxième vecteur d'angle d'arrivée caractérisant le signal reçu par le deuxième dispositif et transmis selon ladite liaison à classifier par le premier dispositif, les premier et deuxième vecteurs d'angle d'arrivée dudit signal radiofréquence étant exprimés dans ledit référentiel commun,
   - classification de ladite liaison de communication radiofréquence en liaison de communication radiofréquence indirecte si les premier et deuxième vecteurs sont de directions distinctes, ou s'ils sont de même direction et de même sens;
et comprenant en outre les étapes suivantes, mises en œuvre lorsque les premier et deuxième vecteurs sont de même direction et de sens opposé: -à partir d'un élément caractérisant le signal reçu par le premier dispositif, détermination d'un premier positionnement desdits premier et deuxième dispositifs de communication radiofréquence dans ledit référentiel utilisé en commun;
   - à partir d'un élément caractérisant le signal reçu par le deuxième dispositif, détermination d'un deuxième positionnement desdits premier et deuxième dispositifs de communication radiofréquence dans ledit référentiel utilisé en commun ; - en cas d'incohérence entre le premier et le deuxième positionnement, classification de ladite liaison de communication radiofréquence en liaison de communication radiofréquence indirecte;
   - en cas de cohérence entre le premier et le deuxième positionnement, classification de ladite liaison de communication radiofréquence en liaison de communication radiofréquence directe; ledit élément caractérisant le signal reçu par le premier dispositif et/ou ledit élément caractérisant le signal reçu par le deuxième dispositif étant une information représentative de la distance inter-dispositif séparant lesdits premier et deuxième dispositifs de communication radiofréquence.

Par la suite, on entend par vecteur d'angle d'arrivée un segment de droite représentatif de la direction et du sens d'arrivée du signal reçu par chaque dispositif entre lesquels la liaison à classifier est établie. Un tel vecteur est représentatif, par sa direction, de l'angle d'arrivée AoA (de l'anglais *Angle of Arrival*) du signal reçu, et son sens est représentatif du sens selon lequel ladite liaison à classifier est parcourue.

Ainsi, la présente invention propose de tirer profit d'un vecteur d'angle d'arrivée représentatif de l'angle d'arrivée AoA (de l'anglais Angle of Arrival) en utilisant un référentiel commun partagé entre les dispositifs communicants selon ladite liaison (i.e. le trajet) à classifier.

En effet, classiquement le référentiel utilisé par chaque dispositif est défini par le plan de ses antennes, ce qui ne permet pas de tirer profit de l'angle d'arrivée pour classifier la liaison de communication (i.e. le trajet) entre les deux dispositifs communicants considérés.

Il est à noter qu'ici par référentiel commun on entend que le référentiel utilisé pour exprimer chaque orientation ou chaque vecteur n'est pas forcément utilisé directement par le module de électronique de classification d'une liaison de communication radiofréquence, en liaison directe ou en liaison indirecte, mais via l'application d'une matrice de passage prédéterminée et connue entre le référentiel classiquement utilisé par chaque dispositif défini par le plan de ses antennes et ce référentiel commun.

L'uniformisation des plans de référence des dispositifs communicants évaluant leur angle d'arrivée AoA respectifs, par partage d'un référentiel commun, permet de distinguer (i.e. classifier) une liaison de communication directe d'une liaison de communication indirecte, et ce de manière fiable à partir desdits au moins deux dispositifs communicants, ce qui permet d'éviter l'approche classique basée sur la nécessité d'avoir au moins trois dispositifs communicants et la mise en œuvre de triangulation/trilatération associée.

Suivant d'autres aspects avantageux de l'invention, le procédé de classification d'une liaison de communication radiofréquence, en liaison directe ou en liaison indirecte comprend une ou plusieurs des caractéristiques suivantes, prises isolément ou suivant toutes les combinaisons techniquement possibles :
- le procédé comprend en outre les étapes suivantes, mises en œuvre lorsque les premier et deuxième vecteurs sont de même direction et de sens opposé :
   - à partir d'un élément caractérisant le signal reçu par le premier dispositif, détermination d'un premier positionnement desdits premier et deuxième dispositifs de communication radiofréquence dans ledit référentiel utilisé en commun ;
   - à partir d'un élément caractérisant le signal reçu par le deuxième dispositif, détermination d'un deuxième positionnement desdits premier et deuxième dispositifs de communication radiofréquence dans ledit référentiel utilisé en commun ;
   - en cas d'incohérence entre le premier et le deuxième positionnement, classification de ladite liaison de communication radiofréquence en liaison de communication radiofréquence indirecte ;
   - en cas de cohérence entre le premier et le deuxième positionnement, classification de ladite liaison de communication radiofréquence en liaison de communication radiofréquence directe ;
- ledit élément caractérisant le signal reçu par le premier dispositif et/ou ledit élément caractérisant le signal reçu par le deuxième dispositif est une information représentative de la distance inter-dispositif séparant lesdits premier et deuxième dispositifs de communication radiofréquence ;
- ladite information représentative de la distance inter-dispositif séparant lesdits premier et deuxième dispositifs de communication radiofréquence est obtenue à partir d'un temps de vol associé audit signal reçu ;
- ledit référentiel commun est un repère bidimensionnel ou tridimensionnel partagé par le premier et le deuxième dispositif de communication radiofréquence ;
- le procédé comprend en outre les étapes suivantes mises en œuvre au préalable de l'étape d'obtention de l'orientation de chaque antenne, et mises en œuvre au sein de chacun desdits premier et deuxième dispositifs de communication radiofréquence :
   - la détermination de l'orientation de leurs antennes exprimée dans ledit référentiel commun ;
   - la transmission de ladite orientation audit module électronique de classification de liaison de communication radiofréquence ;
- ladite détermination de l'orientation d'antenne(s) est mise en œuvre en utilisant au moins un des éléments appartenant au groupe comprenant au moins:
   - une unité de mesure inertielle propre à être embarquée au sein d'au moins un desdits premier et deuxième dispositifs de communication radiofréquence ;
   - un capteur de cap propre à être embarquée au sein d'au moins un desdits premier et deuxième dispositifs de communication radiofréquence ;
   - un capteur d'image propre à utiliser différents points de référence associé à un module de traitement d'image propre à mettre en œuvre une localisation et une cartographie simultanées ;
   - un récepteur GNSS équipé de deux antennes GNSS ;
- l'étape d'obtention de l'orientation de chaque antenne comprend, pour au moins un desdits premier et deuxième dispositifs de communication radiofréquence, l'obtention d'une information représentative de ladite orientation de chaque antenne dudit au moins un desdits premier et deuxième dispositifs de communication radiofréquence, ladite orientation étant déterminée au préalable par fixation (58) dans l'espace de la position dudit au moins un desdits premier et deuxième dispositifs de communication radiofréquence.

L'invention a également pour objet un programme d'ordinateur comportant des instructions logicielles qui, lorsqu'elles sont exécutées par un ordinateur, mettent en œuvre un tel procédé de classification d'une liaison de communication radiofréquence, en liaison directe ou en liaison indirecte tel que défini ci-dessus.

L'invention concerne également un module électronique de classification d'une liaison de communication radiofréquence, en liaison directe ou en liaison indirecte, entre un premier dispositif de communication radiofréquence et un deuxième dispositif de communication radiofréquence,
chacun desdits premier et deuxième dispositifs comprenant au moins deux antennes radiofréquence et un outil d'obtention d'un vecteur d'angle d'arrivée caractérisant un signal radiofréquence reçu,
ledit module électronique de classification de liaison de communication radiofréquence étant configuré pour :
   - obtenir l'orientation de chaque antenne dudit premier dispositif de communication radiofréquence, et l'orientation de chaque antenne dudit deuxième dispositif de communication radiofréquence, chaque orientation étant exprimée dans un référentiel commun auxdits premier et deuxième dispositifs de communication radiofréquence ;
   - obtenir un premier vecteur d'angle d'arrivée caractérisant le signal reçu par le premier dispositif et transmis selon ladite liaison à classifier par le deuxième dispositif et un deuxième vecteur d'angle d'arrivée caractérisant le signal reçu par le deuxième dispositif et transmis selon ladite liaison à classifier par le premier dispositif, les premier et deuxième vecteurs d'angle d'arrivée dudit signal radiofréquence étant exprimés dans ledit référentiel commun,
   - classer ladite liaison de communication radiofréquence en liaison de communication radiofréquence indirecte si les premier et deuxième vecteurs sont de directions distinctes, ou s'ils sont de même direction et de même sens.

L'invention concerne également un dispositif de communication radiofréquence comprenant :
- un système antennaire comprenant au moins deux antennes radiofréquence, et
- un outil d'obtention d'un vecteur d'angle d'arrivée caractérisant un signal radiofréquence reçu,
le dispositif étant comprenant en outre un module de classification d'une liaison de communication radiofréquence tel que décrit précédemment.

Suivant d'autres aspects avantageux de l'invention, le dispositif de communication radiofréquence comprend une ou plusieurs des caractéristiques suivantes, prises isolément ou suivant toutes les combinaisons techniquement possibles :
- ledit système antennaire comprend trois antennes non alignées dans l'espace ;
- ledit dispositif est configuré pour émettre et/ou recevoir des signaux radiofréquence Ultra Large Bande UWB ou longue portée LoRa^{®} ;

L'invention concerne également un système de localisation de dispositifs de communication radiofréquence comprenant :
- un ensemble d'au moins deux dispositifs de communication comprenant chacun :
   - un système antennaire comprenant au moins deux antennes radiofréquence, et
   - un outil d'obtention d'un vecteur d'angle d'arrivée caractérisant un signal radiofréquence reçu ;
- au moins un module de classification d'une liaison de communication radiofréquence.
tel que décrit précédemment.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- **[****Fig 1****]** la figure 1 est un schéma illustrant un module électronique de classification d'une liaison de communication radiofréquence, en liaison directe ou en liaison indirecte entre un premier dispositif de communication radiofréquence et un deuxième dispositif de communication radiofréquence selon un mode de réalisation de l'invention ;
- **[****Fig 2****]** la figure 2 est un schéma illustrant un exemple d'application dudit module électronique de classification au sein d'un système de localisation de dispositifs de communication radiofréquence ;
- **[****Fig 3****]** la figure 3 est un organigramme d'un procédé de classification d'une liaison de communication radiofréquence, en liaison directe ou en liaison indirecte selon la présente invention.

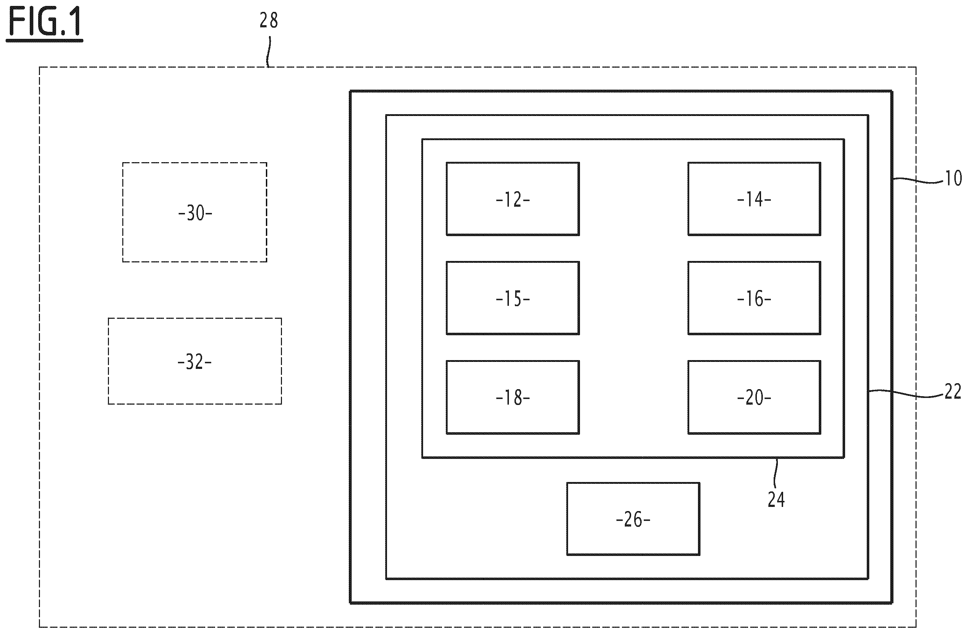

La figure 1 est une représentation schématique d'un mode de réalisation d'un module 10 électronique de classification d'une liaison de communication radiofréquence selon la présente invention.

Plus précisément, un tel module 10 est configuré pour classer une liaison de communication radiofréquence, en liaison directe ou en liaison indirecte, entre un premier dispositif de communication radiofréquence et un deuxième dispositif de communication radiofréquence, chacun desdits premier et deuxième dispositifs comprenant au moins deux antennes radiofréquence et un outil d'estimation de l'angle d'arrivée d'un signal radiofréquence reçu.

Pour ce faire, tel qu'illustré par la figure 1, le module 10 électronique de classification d'une liaison de communication radiofréquence comprend tout d'abord un premier outil 12 d'obtention configuré pour obtenir l'orientation de chaque antenne dudit premier dispositif de communication radiofréquence, et l'orientation de chaque antenne dudit deuxième dispositif de communication radiofréquence, chaque orientation étant exprimée dans un référentiel commun auxdits premier et deuxième dispositifs de communication radiofréquence.

Il est à noter que selon un premier aspect optionnel, un tel premier outil 12 d'obtention est uniquement configuré pour recevoir l'orientation de chaque antenne des premier et deuxième dispositifs de communication radiofréquence, notamment lorsque ledit module 10 électronique de classification est en dehors desdits dispositifs.

Selon un deuxième aspect optionnel, non représenté, notamment dans le cas où chaque dispositif embarque directement ledit module 10 électronique de classification, le premier outil 12 d'obtention est également configuré pour mettre en œuvre au préalable de l'étape d'obtention de l'orientation de chaque antenne, la détermination de l'orientation de leurs antennes exprimée dans ledit référentiel commun, ce qui vaut « transmission directe » de ladite orientation audit module électronique 10 de classification de liaison de communication radiofréquence. Selon ce deuxième aspect optionnel, de manière non représentée, l'outil 12 comprend alors pour déterminer directement l'orientation de chaque antenne, au moins un des éléments appartenant au groupe comprenant au moins : une unité de mesure inertielle propre à être embarquée au sein d'au moins un desdits premier et deuxième dispositifs de communication radiofréquence ; un capteur de cap propre à être embarquée au sein d'au moins un desdits premier et deuxième dispositifs de communication radiofréquence ; un capteur d'image propre à utiliser différents points de référence associé à un module de traitement d'image propre à mettre en œuvre une localisation et une cartographie simultanées ; un récepteur GNSS équipé de deux antennes GNSS. Il est à noter que le capteur de cap, le capteur d'image ou encore le récepteur GNSS, proposés à titre d'alternative à l'unité de mesure inertielle, permettent chacun d'éviter la dérive dans le temps généralement associée à une unité de mesure inertielle.

De plus, le module 10 électronique de classification d'une liaison de communication radiofréquence comprend un deuxième outil 14 d'obtention configuré pour obtenir un premier vecteur d'angle d'arrivée caractérisant le signal reçu par le premier dispositif et transmis selon ladite liaison à classifier par le deuxième dispositif.

De plus, le module 10 électronique de classification d'une liaison de communication radiofréquence comprend un troisième outil 15 d'obtention configuré pour obtenir un deuxième vecteur d'angle d'arrivée caractérisant le signal reçu par le deuxième dispositif et transmis selon ladite liaison à classifier par le premier dispositif, les premier et deuxième vecteurs d'angle d'arrivée dudit signal radiofréquence étant exprimés dans ledit référentiel commun.

Le module 10 électronique de classification d'une liaison de communication radiofréquence comprend par ailleurs un outil 16 de classification configuré pour classifier ladite liaison de communication radiofréquence en liaison de communication radiofréquence indirecte si les premier et deuxième vecteurs sont de directions distinctes, ou s'ils sont de même direction et de même sens.

De manière optionnelle, le module 10 électronique de classification d'une liaison de communication radiofréquence comprend également un premier outil 18 de détermination configuré pour déterminer un premier positionnement desdits premier et deuxième dispositifs de communication radiofréquence dans ledit référentiel utilisé en commun, et ce à partir d'un élément caractérisant le signal reçu par le premier dispositif.

De plus, également de manière optionnelle, le module 10 électronique de classification d'une liaison de communication radiofréquence comprend également un deuxième outil 20 de détermination configuré pour déterminer un deuxième positionnement desdits premier et deuxième dispositifs de communication radiofréquence dans ledit référentiel utilisé en commun.

Selon ce mode de réalisation optionnel, l'outil de classification 16 est en outre optionnellement configuré pour vérifier la cohérence ou l'incohérence des premier et deuxième positionnements respectivement déterminés via les premier 18 et deuxième 20 outils de détermination, et classifier ladite liaison de communication radiofréquence en :
- liaison de communication radiofréquence indirecte en cas d'incohérence entre ledit premier positionnement et ledit deuxième positionnement, ou
- liaison de communication radiofréquence directe en cas de cohérence entre ledit premier positionnement et ledit deuxième positionnement.

Sur l'exemple de la figure 1, le module 10 est configuré pour classer une liaison de communication radiofréquence, en liaison directe ou en liaison indirecte, comprend une unité de traitement 22 formée par exemple d'une mémoire 24 et d'un processeur 26 associé à la mémoire, et le module 10 est au moins en partie réalisé sous forme d'un logiciel, ou d'une brique logicielle, exécutable par le processeur, notamment le premier outil d'obtention 12, le deuxième outil d'obtention 14, le troisième outil d'obtention 15, l'outil de classification 16, et optionnellement les premier et le deuxième outils de détermination 18 et 20. La mémoire 24 du module 10 électronique de classification d'une liaison de communication radiofréquence est alors apte à stocker de tels logiciels ou briques logicielles, et le processeur 26 est alors apte à les exécuter.

En variante non représentée, le premier outil d'obtention 12, le deuxième outil d'obtention 14, le troisième outil d'obtention 15, l'outil de classification 16, et optionnellement les premier et le deuxième outils de détermination 18 et 20 sont réalisés chacun sous forme d'un composant logique programmable, tel qu'un FPGA (de l'anglais Field Programmable Gate Array), ou encore sous forme d'un circuit intégré dédié, tel qu'un ASIC (de l'anglais Application Specific integrated Circuit).

Lorsqu'une partie du module 10 électronique de classification d'une liaison de communication radiofréquences selon la présente invention est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Comme illustré par la figure 1, le module 10 électronique de classification d'une liaison de communication radiofréquences selon la présente invention est, selon un mode de réalisation, illustré par la figure 1 propre à être embarqué au sein d'un dispositif 28 de communication radiofréquence comprenant tout d'abord un système antennaire 30 comprenant au moins deux antennes radiofréquence, et un outil 32 d'obtention d'un vecteur d'angle d'arrivée caractérisant un signal radiofréquence reçu.

Selon un exemple particulier de ce mode de réalisation, ledit système antennaire 30 comprend, a minima deux antennes qui sont suffisantes pour estimer un angle d'arrivée AoA (de l'anglais Angle of Arrival) dans un plan, voire typiquement trois antennes non alignées dans l'espace, ce qui permet de rajouter de la diversité spatiale dans l'estimé de chaque angle d'arrivée dont le vecteur d'angle d'arrivée associé à chaque dispositif est représentatif.

Selon une variante en complément facultatif, ledit dispositif est configuré pour émettre et/ou recevoir des signaux radiofréquence Ultra Large Bande UWB (de l'anglais *Ultra Wide Band*) ou longue portée LoRa^{®}. L'utilisation de signaux LoRa^{®} au lieu de signaux UWB permettent en effet de tirer profit d'une portée plus importante.

Selon une autre variante, non représentée, la présente invention porte également sur un système de localisation de dispositifs de communication comprenant :
- un ensemble d'au moins deux dispositifs de communication comprenant chacun :
   - un système antennaire comprenant au moins deux antennes radiofréquence, et
   - un outil d'obtention d'un vecteur d'angle d'arrivée caractérisant un signal radiofréquence reçu ;
- au moins un module 10 de classification d'une liaison de communication radiofréquence tel que décrit précédemment.

Autrement dit, selon cette variante, il est possible que le module 10 de classification d'une liaison de communication radiofréquence tel que décrit précédemment soit embarqué ou non au sein desdits au moins deux dispositifs de communication.

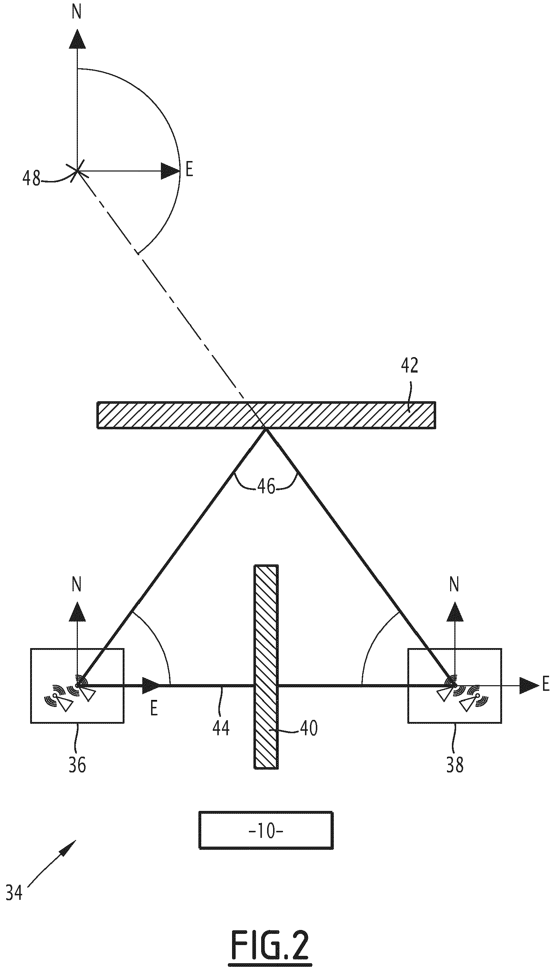

La figure 2 est un schéma illustrant un exemple d'application dudit module électronique de classification au sein d'un système 34 de localisation de dispositifs de communication radiofréquence.

Plus précisément, comme illustré par la figure 2, le système 34 de localisation de dispositifs de communication radiofréquence comprend tout d'abord au moins deux dispositifs 36 et 38 de communication comprenant chacun un système antennaire comprenant au moins deux antennes radiofréquence et un outil d'obtention d'un vecteur d'angle d'arrivée caractérisant un signal radiofréquence reçu par ledit dispositif.

Ces deux dispositifs 36 et 38 sont par exemple des dispositifs UWB qui ne sont pas alignés dans l'espace.

De plus, tel qu'illustré par la figure 2, le système selon la présente invention comprend en outre un module électronique 10 de classification de la liaison de communication radiofréquence entre les deux dispositifs 36 et 38, tel que précédemment décrit.

Selon la présente invention, il est en effet proposé que ledit module électronique 10 de classification de la liaison de communication radiofréquence entre les deux dispositifs 36 et 38 obtienne l'orientation de chaque antenne de chacun de ces dispositifs et l'exprime dans un référentiel commun.

Selon un aspect optionnel, ledit référentiel commun est un repère bidimensionnel ou tridimensionnel partagé par le premier et le deuxième dispositif de communication radiofréquence, et correspond par exemple tel qu'illustré par l'exemple de la figure 2 au référentiel Nord/Est.

De plus, tel qu'indiqué précédemment, ledit module électronique 10 de classification de la liaison de communication radiofréquence entre les deux dispositifs 36 et 38 est également propre à obtenir le premier vecteur d'angle d'arrivée caractérisant le signal reçu par le premier dispositif 36 et le deuxième vecteur d'angle d'arrivée caractérisant le signal reçu par le deuxième dispositif 38 à les exprimer tout deux dans ce référentiel commun Nord/Est.

Sur l'exemple de la figure 2, deux obstacles 40 et 42 sont représentés.

En l'absence de l'obstacle 40, la liaison de communication radiofréquence entre les deux dispositifs 36 et 38 est classifiée par le module électronique 10 de classification en liaison directe 44 lorsque les premier et deuxième vecteurs exprimés dans le référentiel commun Nord/Est sont de même direction et de sens opposé comme détaillé plus amplement par la suite au moyen de traitements complémentaires.

Sur la figure 2, le premier vecteur d'angle d'arrivée caractérisant le signal reçu par le premier dispositif 36, et exprimé, dans le référentiel commun Nord/Est, est alors dans le sens du deuxième dispositif 38 vers le premier dispositif 36 receveur, et si la liaison est directe, telle que la liaison 44, selon la direction ouest.

De manière opposée, le deuxième vecteur d'angle d'arrivée caractérisant le signal reçu par le deuxième dispositif 38, et exprimé, dans le référentiel commun Nord/Est, est dans le sens du premier dispositif 36 vers le deuxième dispositif 38 receveur, et si la liaison est directe, telle que la liaison 44, selon la direction est.

En présence de l'obstacle 40, la liaison de communication radiofréquence entre les deux dispositifs 36 et 38 ne peut être directe et le module électronique 10 de classification selon la présente invention est propre à le déterminer en appliquant trois cas de classification et ce, sans avoir connaissance ou non de la présence de l'obstacle 40.

Selon le premier cas de classification illustré par la figure 2, le premier vecteur d'angle d'arrivée caractérisant le signal reçu par le premier dispositif 36, et exprimé, dans le référentiel commun Nord/Est, est dans le sens du deuxième dispositif 38 vers le premier dispositif 36 receveur, et réfléchi par l'obstacle 42 de sorte que la liaison est indirecte 46 et qu'il est reçu par le premier dispositif 36 selon la direction oblique Sud-Ouest. Autrement dit, le premier vecteur d'angle d'arrivée caractérisant le signal reçu par le premier dispositif 36 correspond, au regard de la figure 2, en partant du deuxième dispositif émetteur 38, au deuxième segment de la ligne brisée à deux segments formant la liaison indirecte 46, et ce dans le sens descendant vers le premier dispositif 36 receveur.

Au contraire, le deuxième vecteur d'angle d'arrivée caractérisant le signal reçu par le deuxième dispositif 38, et exprimé, dans le référentiel commun Nord/Est, est dans le sens du premier dispositif 36 vers le deuxième dispositif 38 receveur, et réfléchi par l'obstacle 42 de sorte que la liaison est indirecte 46 et qu'il est reçu par le deuxième dispositif 38 selon la direction oblique Sud-Est. Autrement dit, le deuxième vecteur d'angle d'arrivée caractérisant le signal reçu par le deuxième dispositif 38 correspond, au regard de la figure 2, en partant du premier dispositif émetteur 36, au deuxième segment de la ligne brisée à deux segments formant la liaison indirecte 46, et ce dans le sens descendant vers le deuxième dispositif 38 receveur.

Le premier vecteur d'angle d'arrivée caractérisant le signal reçu par le premier dispositif 36 et le deuxième vecteur d'angle d'arrivée caractérisant le signal reçu par le deuxième dispositif 38 sont donc de direction distinctes.

Selon un deuxième cas de classification, non représenté, le premier vecteur d'angle d'arrivée caractérisant le signal reçu par le premier dispositif 36 et le deuxième vecteur d'angle d'arrivée caractérisant le signal reçu par le deuxième dispositif 38 sont de même direction et de même sens, par exemple en présence de plusieurs obstacles propres à générer des trajets multiples.

Selon un troisième cas de classification, les premier et deuxième vecteurs exprimés dans le référentiel commun Nord/Est sont de même direction et de sens opposé, ce qui pourrait permettre de classer la liaison en liaison directe telle que la liaison directe 44 alors qu'il s'agit en réalité d'une liaison indirecte 46, les premier et deuxième vecteurs exprimés dans le référentiel commun Nord/Est étant alors de même direction et de sens opposé du fait de trajets multiples. Pour détecter, ce troisième cas particulier de classification en liaison indirecte, le module électronique 10 de classification est alors propre à mettre en œuvre des étapes supplémentaires détaillées ci-après.

Plus précisément, le module électronique 10 de classification est tout d'abord propre à déterminer, à partir d'un élément caractérisant le signal reçu par le premier dispositif, un premier positionnement desdits premier et deuxième dispositifs de communication radiofréquence dans ledit référentiel utilisé en commun. Puis, le module électronique 10 de classification est propre à déterminer, à partir d'un élément caractérisant le signal reçu par le deuxième dispositif, un deuxième positionnement desdits premier et deuxième dispositifs de communication radiofréquence dans ledit référentiel utilisé en commun.

En cas d'incohérence entre le premier et le deuxième positionnement, le module électronique 10 de classification est propre à classifier ladite liaison de communication radiofréquence en liaison de communication radiofréquence indirecte 46 NLOS (de l'anglais *Non Line Of Sight*), et dans le cas contraire (i.e. en cas de cohérence) en liaison de communication radiofréquence directe 44 (i.e. trajet direct) LoS (de l'anglais *Line Of Sight*)*.*

Il est à noter que selon une variante optionnelle, ledit élément caractérisant le signal reçu par le premier dispositif et/ou ledit élément caractérisant le signal reçu par le deuxième dispositif est une information représentative de la distance inter-dispositif séparant lesdits premier et deuxième dispositifs de communication radiofréquence.

Et selon un aspect optionnel de cette variante, ladite information représentative de la distance inter-dispositif séparant lesdits premier et deuxième dispositifs de communication radiofréquence est obtenue à partir d'un temps de vol associé audit signal reçu.

Comme indiqué précédemment, la classification de la liaison de communication radiofréquence en liaison directe ou indirecte mise en œuvre par le module électronique 10 de classification est ainsi fiable et permet d'éviter l'écueil précité relatif à l'état de la technique actuel selon lequel lorsqu'une transmission de signal selon une liaison indirecte NLOS (de l'anglais *Non Line Of Sight*) présente une puissance suffisante pour être détectée la localisation conjointe des dispositifs communicants va prendre en compte une distance présentant un biais, et estimer une position nommée fantôme 48 du dispositif émetteur (au lieu de sa véritable position 36) par le dispositif récepteur 38, tel qu'illustré sur la figure 2.

En effet, selon la présente invention, il est proposé de tirer profit d'un vecteur d'angle d'arrivée représentatif de l'angle d'arrivée AoA (de l'anglais Angle of Arrival) en utilisant un référentiel commun partagé entre les dispositifs communicants selon ladite liaison (i.e. le trajet) à classifier, et le cas échéant notamment, lorsque les premier et deuxième vecteurs exprimés dans le référentiel commun, notamment Nord/Est, sont de même direction et de sens opposé, de le confirmer en appliquant en outre une vérification de la cohérence des positionnements obtenus à partir du signal reçu par le premier dispositif et à partir du signal reçu par le deuxième dispositif.

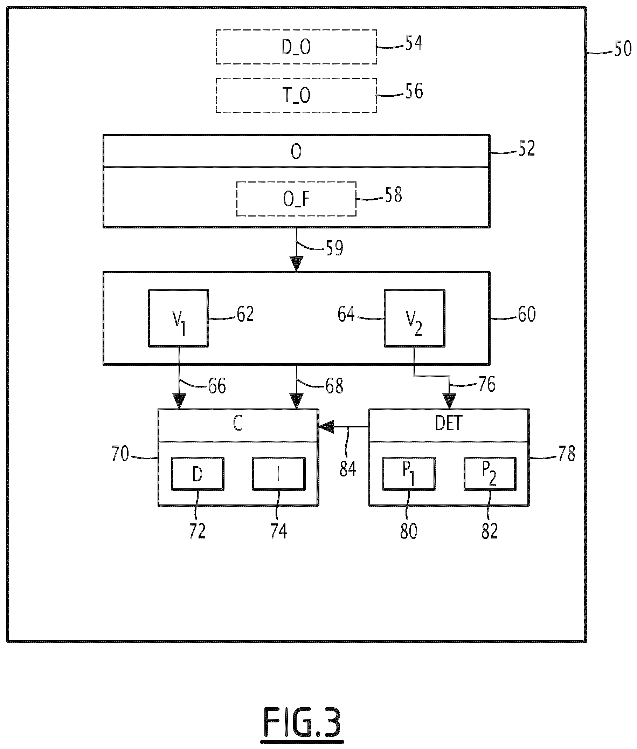

On décrit ci-après en relation avec la figure 3, un exemple de fonctionnement du système de localisation de dispositifs de communication radiofréquence selon la présente invention, et en particulier du module électronique 10 de classification d'une liaison radiofréquence tel qu'illustré précédemment en relation avec la figure 1.

Plus précisément, le procédé 50 de classification d'une liaison de communication radiofréquence, en liaison directe ou en liaison indirecte comprend, de manière générale, une première étape 52 d'obtention O de l'orientation de chaque antenne dudit premier dispositif de communication radiofréquence, et de l'orientation de chaque antenne dudit deuxième dispositif de communication radiofréquence, chaque orientation étant exprimée dans un référentiel commun auxdits premier et deuxième dispositifs de communication radiofréquence.

De manière optionnelle, illustrée en pointillés sur la figure 3, le procédé 50 comprend en outre, au préalable de l'étape d'obtention 52 de l'orientation de chaque antenne, les deux étapes suivantes mises en œuvre au sein de chacun desdits premier et deuxième dispositifs de communication radiofréquence, à savoir une étape 54 de détermination D_O de l'orientation de leurs antennes exprimée dans ledit référentiel commun, et une étape 56 de transmission T_O de ladite orientation audit module électronique 10 de classification de liaison de communication radiofréquence.

Selon un autre aspect optionnel, illustré en pointillé sur la figure 3, l'étape d'obtention 52 de l'orientation de chaque antenne comprend, pour au moins un desdits premier et deuxième dispositifs de communication radiofréquence, une étape optionnelle d'obtention 58 d'une information représentative de ladite orientation de chaque antenne dudit au moins un desdits premier et deuxième dispositifs de communication radiofréquence, ladite orientation étant déterminée au préalable par fixation dans l'espace de la position dudit au moins un desdits premier et deuxième dispositifs de communication radiofréquence.

Le référentiel commun 59 utilisé lors de l'étape d'obtention 52 est par la suite utilisé au cours d'une étape 60 d'obtention conjointe comprenant l'obtention 62 d'un premier vecteur V₁ d'angle d'arrivée caractérisant le signal reçu par le premier dispositif et transmis selon ladite liaison à classifier par le deuxième dispositif, et l'obtention 64 d'un deuxième vecteur V₂ d'angle d'arrivée caractérisant le signal reçu par le deuxième dispositif et transmis selon ladite liaison à classifier par le premier dispositif, les premier et deuxième vecteurs d'angle d'arrivée dudit signal radiofréquence étant exprimés dans ledit référentiel commun.

Si selon un premier cas 66 les premier et deuxième vecteurs d'angle d'arrivée sont de directions distinctes, ou si selon un deuxième cas 68 les premier et deuxième vecteurs d'angle d'arrivée sont de même direction et de même sens, le procédé 50 de classification d'une liaison de communication radiofréquence, en liaison directe ou en liaison indirecte comprend une étape 70 de classification de ladite liaison de communication radiofréquence en liaison de communication radiofréquence indirecte 74.

Selon un troisième cas 76, les premier et deuxième vecteurs sont de même direction et de sens opposé, le procédé 50 de classification d'une liaison de communication peut directement classer ladite liaison en liaison directe 72 ou avantageusement, optionnellement à titre de vérification, comprendre en outre une étape 78 de détermination DET comprenant : à partir d'un élément caractérisant le signal reçu par le premier dispositif, une étape 80 de détermination d'un premier positionnement P₁ desdits premier et deuxième dispositifs de communication radiofréquence dans ledit référentiel utilisé en commun, et à partir d'un élément caractérisant le signal reçu par le deuxième dispositif, une étape 82 de détermination d'un deuxième positionnement P₂ desdits premier et deuxième dispositifs de communication radiofréquence dans ledit référentiel utilisé en commun.

Le résultat 84 de cette étape de détermination 78 est fourni en entrée de l'étape de classification 70, et en cas de cohérence le premier positionnement P₁ et le deuxième positionnement P₂, ladite liaison de communication radiofréquence est classifiée 72 en liaison de communication radiofréquence directe D, alors qu'en cas en cas d'incohérence entre le premier positionnement P₁ et le deuxième positionnement P₂, ladite liaison de communication radiofréquence est classifiée 74 en liaison de communication radiofréquence indirecte I.

Tel qu'indiqué précédemment, il est à noter que selon une variante optionnelle, ledit élément caractérisant le signal reçu par le premier dispositif et/ou ledit élément caractérisant le signal reçu par le deuxième dispositif est une information représentative de la distance inter-dispositif séparant lesdits premier et deuxième dispositifs de communication radiofréquence.

Et selon un aspect optionnel de cette variante, ladite information représentative de la distance inter-dispositif séparant lesdits premier et deuxième dispositifs de communication radiofréquence est obtenue à partir d'un temps de vol associé audit signal reçu.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de distinguer (i.e. classifier) une liaison de communication directe d'une liaison de communication indirecte, et ce de manière fiable à partir desdits au moins deux dispositifs communicants, ce qui permet d'éviter l'approche classique basée sur la nécessité d'avoir au moins trois dispositifs communicants et la mise en œuvre de triangulation/trilatération associée.

## Revendications

1. Procédé (50) de classification d'une liaison de communication radiofréquence, en liaison directe ou en liaison indirecte, entre un premier dispositif de communication radiofréquence et un deuxième dispositif de communication radiofréquence,
chacun desdits premier et deuxième dispositifs comprenant au moins deux antennes radiofréquence et un outil d'obtention d'un vecteur d'angle d'arrivée caractérisant un signal radiofréquence reçu,
ledit procédé étant mis en œuvre au sein d'un système de localisation de dispositifs de communication radiofréquence comprenant au moins ledit premier dispositif de communication radiofréquence, ledit deuxième dispositif de communication radiofréquence, et au moins un module électronique de classification de liaison de communication radiofréquence,
ledit procédé comprenant les étapes suivantes :
- obtention (52) de l'orientation de chaque antenne dudit premier dispositif de communication radiofréquence, et de l'orientation de chaque antenne dudit deuxième dispositif de communication radiofréquence, chaque orientation étant exprimée dans un référentiel commun auxdits premier et deuxième dispositifs de communication radiofréquence ;
- obtention (60) d'un premier vecteur d'angle d'arrivée (62) caractérisant le signal reçu par le premier dispositif et transmis selon ladite liaison à classifier par le deuxième dispositif, et d'un deuxième vecteur d'angle d'arrivée (64) caractérisant le signal reçu par le deuxième dispositif et transmis selon ladite liaison à classifier par le premier dispositif, les premier et deuxième vecteurs d'angle d'arrivée dudit signal radiofréquence étant exprimés dans ledit référentiel commun,
- classification (70) de ladite liaison de communication radiofréquence en liaison de communication radiofréquence indirecte (74) si les premier et deuxième vecteurs sont de directions distinctes, ou s'ils sont de même direction et de même sens ;
et comprenant en outre les étapes suivantes, mises en œuvre lorsque les premier et deuxième vecteurs sont de même direction et de sens opposé :
- à partir d'un élément caractérisant le signal reçu par le premier dispositif, détermination (78) d'un premier positionnement (80) desdits premier et deuxième dispositifs de communication radiofréquence dans ledit référentiel utilisé en commun ;
- à partir d'un élément caractérisant le signal reçu par le deuxième dispositif, détermination (78) d'un deuxième positionnement (82) desdits premier et deuxième dispositifs de communication radiofréquence dans ledit référentiel utilisé en commun ;
- en cas d'incohérence entre le premier et le deuxième positionnement, classification (70) de ladite liaison de communication radiofréquence en liaison de communication radiofréquence indirecte (74) ;
- en cas de cohérence entre le premier et le deuxième positionnement, classification (70) de ladite liaison de communication radiofréquence en liaison de communication radiofréquence directe (72) ;
ledit élément caractérisant le signal reçu par le premier dispositif et/ou ledit élément caractérisant le signal reçu par le deuxième dispositif étant une information représentative de la distance inter-dispositif séparant lesdits premier et deuxième dispositifs de communication radiofréquence.

2. Procédé (50) selon la revendication 1, dans lequel ladite information représentative de la distance inter-dispositif séparant lesdits premier et deuxième dispositifs de communication radiofréquence est obtenue à partir d'un temps de vol associé audit signal reçu.

3. Procédé (50) selon l'une quelconque des revendications précédentes, dans lequel ledit référentiel commun est un repère bidimensionnel ou tridimensionnel partagé par le premier et le deuxième dispositif de communication radiofréquence.

4. Procédé (50) selon l'une quelconque des revendications précédentes, comprenant en outre les étapes suivantes mises en œuvre au préalable de l'étape d'obtention (52) de l'orientation de chaque antenne, et mises en œuvre au sein de chacun desdits premier et deuxième dispositifs de communication radiofréquence :
- la détermination (54) de l'orientation de leurs antennes exprimée dans ledit référentiel commun ;
- la transmission (56) de ladite orientation audit module électronique de classification de liaison de communication radiofréquence.

5. Procédé selon la revendication 4 dans lequel ladite détermination (54) de l'orientation d'antenne(s) est mise en œuvre en utilisant au moins un des éléments appartenant au groupe comprenant au moins:
- une unité de mesure inertielle propre à être embarquée au sein d'au moins un desdits premier et deuxième dispositifs de communication radiofréquence ;
- un capteur de cap propre à être embarquée au sein d'au moins un desdits premier et deuxième dispositifs de communication radiofréquence ;
- un capteur d'image propre à utiliser différents points de référence associé à un module de traitement d'image propre à mettre en œuvre une localisation et une cartographie simultanées ;
- un récepteur GNSS équipé de deux antennes GNSS.

6. Procédé selon l'une quelconque des revendications 1 à 3, dans lequel l'étape d'obtention (52) de l'orientation de chaque antenne comprend, pour au moins un desdits premier et deuxième dispositifs de communication radiofréquence, l'obtention d'une information représentative de ladite orientation de chaque antenne dudit au moins un desdits premier et deuxième dispositifs de communication radiofréquence, ladite orientation étant déterminée au préalable par fixation (58) dans l'espace de la position dudit au moins un desdits premier et deuxième dispositifs de communication radiofréquence.

7. Programme d'ordinateur comportant des instructions logicielles qui lorsqu'elles sont exécutées par un ordinateur, mettent en œuvre un procédé de classification d'une liaison de communication radiofréquence, en liaison directe ou en liaison indirecte selon l'une quelconque des revendications précédentes.

8. Module électronique de classification d'une liaison de communication radiofréquence, en liaison directe ou en liaison indirecte, entre un premier dispositif de communication radiofréquence et un deuxième dispositif de communication radiofréquence,
chacun desdits premier et deuxième dispositifs comprenant au moins deux antennes radiofréquence et un outil d'obtention d'un vecteur d'angle d'arrivée caractérisant un signal radiofréquence reçu,
**caractérisé en ce que** ledit module électronique de classification de liaison de communication radiofréquence est configuré pour:
- obtenir l'orientation de chaque antenne dudit premier dispositif de communication radiofréquence, et l'orientation de chaque antenne dudit deuxième dispositif de communication radiofréquence, chaque orientation étant exprimée dans un référentiel commun auxdits premier et deuxième dispositifs de communication radiofréquence ;
- obtenir un premier vecteur d'angle d'arrivée caractérisant le signal reçu par le premier dispositif et transmis selon ladite liaison à classifier par le deuxième dispositif et un deuxième vecteur d'angle d'arrivée caractérisant le signal reçu par le deuxième dispositif et transmis selon ladite liaison à classifier par le premier dispositif, les premier et deuxième vecteurs d'angle d'arrivée dudit signal radiofréquence étant exprimés dans ledit référentiel commun,
- classer ladite liaison de communication radiofréquence en liaison de communication radiofréquence indirecte si les premier et deuxième vecteurs sont de directions distinctes, ou s'ils sont de même direction et de même sens ;
et, lorsque les premier et deuxième vecteurs sont de même direction et de sens opposé, configuré pour :
- à partir d'un élément caractérisant le signal reçu par le premier dispositif, déterminer d'un premier positionnement desdits premier et deuxième dispositifs de communication radiofréquence dans ledit référentiel utilisé en commun ;
- à partir d'un élément caractérisant le signal reçu par le deuxième dispositif, déterminer d'un deuxième positionnement desdits premier et deuxième dispositifs de communication radiofréquence dans ledit référentiel utilisé en commun ;
- en cas d'incohérence entre le premier et le deuxième positionnement, classer de ladite liaison de communication radiofréquence en liaison de communication radiofréquence indirecte ;
- en cas de cohérence entre le premier et le deuxième positionnement, classer de ladite liaison de communication radiofréquence en liaison de communication radiofréquence directe ;
ledit élément caractérisant le signal reçu par le premier dispositif et/ou ledit élément caractérisant le signal reçu par le deuxième dispositif étant une information représentative de la distance inter-dispositif séparant lesdits premier et deuxième dispositifs de communication radiofréquence.

9. Dispositif de communication radiofréquence comprenant :
- un système antennaire comprenant au moins deux antennes radiofréquence, et
- un outil d'obtention d'un vecteur d'angle d'arrivée caractérisant un signal radiofréquence reçu,
le dispositif étant **caractérisé en ce qu'**il comprend en outre un module de classification d'une liaison de communication radiofréquence selon la revendication 8.

10. Dispositif de communication radiofréquence selon la revendication 9, dans lequel ledit système antennaire comprend trois antennes non alignées dans l'espace.

11. Dispositif de communication radiofréquence selon la revendication 9 ou 10, dans lequel ledit dispositif est configuré pour émettre et/ou recevoir des signaux radiofréquence Ultra Large Bande UWB ou longue portée LoRa^{®}.

12. Système de localisation de dispositifs de communication radiofréquence **caractérisé en ce qu'**il comprend :
- un ensemble d'au moins deux dispositifs de communication comprenant chacun :
- un système antennaire comprenant au moins deux antennes radiofréquence, et
- un outil d'obtention d'un vecteur d'angle d'arrivée caractérisant un signal radiofréquence reçu ;
- au moins un module électronique de classification d'une liaison de communication radiofréquence selon la revendication 8.

## Patentansprüche

1. Verfahren (50) zur Klassifizierung einer Hochfrequenzkommunikationsverbindung, als direkte Verbindung oder als indirekte Verbindung, zwischen einer ersten Hochfrequenzkommunikationsvorrichtung und einer zweiten Hochfrequenzkommunikationsvorrichtung,
wobei jede der genannten ersten und zweiten Vorrichtungen mindestens zwei Hochfrequenzantennen und ein Werkzeug zur Erlangung eines Vektors der Ankunftswinkel, der ein empfangenes Hochfrequenzsignal charakterisiert, umfasst,
wobei das genannte Verfahren innerhalb eines Lokalisierungssystems von Hochfrequenzkommunikationsvorrichtungen implementiert wird, umfassend mindestens die genannte erste Hochfrequenzkommunikationsvorrichtung, die genannte zweite Hochfrequenzkommunikationsvorrichtung, und mindestens ein elektronisches Modul zur Klassifizierung einer Hochfrequenzkommunikationsverbindung,
wobei das genannte Verfahren die folgenden Schritte umfasst:
- Erlangung (52) der Ausrichtung jeder Antenne der genannten ersten Hochfrequenzkommunikationsvorrichtung, und der Ausrichtung jeder Antenne der genannten zweiten Hochfrequenzkommunikationsvorrichtung, wobei jede Ausrichtung in einem den genannten ersten und zweiten Hochfrequenzkommunikationsvorrichtungen gemeinsamen Bezugssystem ausgedrückt ist;
- Erlangung (60) eines ersten Vektors der Ankunftswinkel (62), der das durch die erste Vorrichtung empfangene und gemäß der genannten zu klassifizierenden Verbindung durch die zweite Vorrichtung übertragene Signal charakterisiert, und eines zweiten Vektors der Ankunftswinkel (64), der das durch die zweite Vorrichtung empfangene und gemäß der genannten zu klassifizierenden Verbindung durch die erste Vorrichtung übertragene Signal charakterisiert, wobei die ersten und zweiten Vektoren der Ankunftswinkel des genannten Hochfrequenzsignals in dem genannten gemeinsamen Bezugssystem ausgedrückt sind,
- Klassifizierung (70) der genannten Hochfrequenzkommunikationsverbindung als indirekte Hochfrequenzkommunikationsverbindung (74), wenn die ersten und zweiten Vektoren unterschiedliche Richtungen aufweisen, oder wenn sie die gleiche Richtung und den gleichen Richtungssinn aufweisen;
und ferner die folgenden Schritte umfassend, die implementiert werden, wenn die ersten und zweiten Vektoren die gleiche Richtung und entgegengesetzten Richtungssinn aufweisen:
- ausgehend von einem Element, das das durch die erste Vorrichtung empfangene Signal charakterisiert, Bestimmung (78) einer ersten Positionierung (80) der genannten ersten und zweiten Hochfrequenzkommunikationsvorrichtungen in dem genannten gemeinsam verwendeten Bezugssystem;
- ausgehend von einem Element, das das durch die zweite Vorrichtung empfangene Signal charakterisiert, Bestimmung (78) einer zweiten Positionierung (82) der genannten ersten und zweiten Hochfrequenzkommunikationsvorrichtungen in dem genannten gemeinsam verwendeten Bezugssystem;
- im Fall einer Inkohärenz zwischen der ersten und der zweiten Positionierung, Klassifizierung (70) der genannten Hochfrequenzkommunikationsverbindung als indirekte Hochfrequenzkommunikationsverbindung (74);
- im Fall einer Kohärenz zwischen der ersten und der zweiten Positionierung, Klassifizierung (70) der genannten Hochfrequenzkommunikationsverbindung als direkte Hochfrequenzkommunikationsverbindung (72);
wobei das genannte Element, das das durch die erste Vorrichtung empfangene Signal charakterisiert, und/oder das genannte Element, das das durch die zweite Vorrichtung empfangene Signal charakterisiert, eine Information ist, die den Zwischenvorrichtungsabstand repräsentiert, der die genannten ersten und zweiten Hochfrequenzkommunikationsvorrichtungen trennt.

2. Verfahren (50) nach Anspruch 1, wobei die genannte Information, die den Zwischenvorrichtungsabstand repräsentiert, der die genannten ersten und zweiten Hochfrequenzkommunikationsvorrichtungen trennt, ausgehend von einer Flugzeit erhalten wird, die dem genannten empfangenen Signal zugeordnet ist.

3. Verfahren (50) nach einem der vorhergehenden Ansprüche, wobei das genannte gemeinsame Bezugssystem ein zweidimensionales oder dreidimensionales Koordinatensystem ist, das von der ersten und der zweiten Hochfrequenzkommunikationsvorrichtung geteilt wird.

4. Verfahren (50) nach einem der vorhergehenden Ansprüche, ferner die folgenden Schritte umfassend, die vor dem Schritt der Erlangung (52) der Ausrichtung jeder Antenne implementiert werden, und innerhalb jeder der genannten ersten und zweiten Hochfrequenzkommunikationsvorrichtungen implementiert werden:
- die Bestimmung (54) der Ausrichtung ihrer Antennen, ausgedrückt in dem genannten gemeinsamen Bezugssystem;
- die Übertragung (56) der genannten Ausrichtung an das genannte elektronische Modul zur Klassifizierung einer Hochfrequenzkommunikationsverbindung.

5. Verfahren nach Anspruch 4, wobei die genannte Bestimmung (54) der Ausrichtung von Antenne(n) implementiert wird, indem mindestens eines der Elemente verwendet wird, die zu der Gruppe gehören, die mindestens umfasst:
- eine inertiale Messeinheit, die geeignet ist, innerhalb mindestens einer der genannten ersten und zweiten Hochfrequenzkommunikationsvorrichtungen eingebettet zu werden;
- einen Kurssensor, der geeignet ist, innerhalb mindestens einer der genannten ersten und zweiten Hochfrequenzkommunikationsvorrichtungen eingebettet zu werden;
- einen Bildsensor, der geeignet ist, unterschiedliche Referenzpunkte zu verwenden, der einem Bildverarbeitungsmodul zugeordnet ist, das geeignet ist, eine simultane Lokalisierung und Kartierung zu implementieren;
- einen GNSS-Empfänger, der mit zwei GNSS-Antennen ausgestattet ist.

6. Verfahren nach einem der Ansprüche 1 bis 3, wobei der Schritt der Erlangung (52) der Ausrichtung jeder Antenne, für mindestens eine der genannten ersten und zweiten Hochfrequenzkommunikationsvorrichtungen, die Erlangung einer Information umfasst, die die genannte Ausrichtung jeder Antenne der genannten mindestens einen der genannten ersten und zweiten Hochfrequenzkommunikationsvorrichtungen repräsentiert, wobei die genannte Ausrichtung zuvor durch Fixierung (58) im Raum der Position der genannten mindestens einen der genannten ersten und zweiten Hochfrequenzkommunikationsvorrichtungen bestimmt wird.

7. Computerprogramm, umfassend Softwareanweisungen, die, wenn sie durch einen Computer ausgeführt werden, ein Verfahren zur Klassifizierung einer Hochfrequenzkommunikationsverbindung, als direkte Verbindung oder als indirekte Verbindung nach einem der vorhergehenden Ansprüche implementieren.

8. Elektronisches Modul zur Klassifizierung einer Hochfrequenzkommunikationsverbindung, als direkte Verbindung oder als indirekte Verbindung, zwischen einer ersten Hochfrequenzkommunikationsvorrichtung und einer zweiten Hochfrequenzkommunikationsvorrichtung,
wobei jede der genannten ersten und zweiten Vorrichtungen mindestens zwei Hochfrequenzantennen und ein Werkzeug zur Erlangung eines Vektors der Ankunftswinkel, der ein empfangenes Hochfrequenzsignal charakterisiert, umfasst,
**dadurch gekennzeichnet, dass** das genannte elektronische Modul zur Klassifizierung einer Hochfrequenzkommunikationsverbindung konfiguriert ist zum:
- Erhalten der Ausrichtung jeder Antenne der genannten ersten Hochfrequenzkommunikationsvorrichtung, und der Ausrichtung jeder Antenne der genannten zweiten Hochfrequenzkommunikationsvorrichtung, wobei jede Ausrichtung in einem den genannten ersten und zweiten Hochfrequenzkommunikationsvorrichtungen gemeinsamen Bezugssystem ausgedrückt ist;
- Erhalten eines ersten Vektors der Ankunftswinkel, der das durch die erste Vorrichtung empfangene und gemäß der genannten zu klassifizierenden Verbindung durch die zweite Vorrichtung übertragene Signal charakterisiert, und eines zweiten Vektors der Ankunftswinkel, der das durch die zweite Vorrichtung empfangene und gemäß der genannten zu klassifizierenden Verbindung durch die erste Vorrichtung übertragene Signal charakterisiert, wobei die ersten und zweiten Vektoren der Ankunftswinkel des genannten Hochfrequenzsignals in dem genannten gemeinsamen Bezugssystem ausgedrückt sind,
- Klassifizieren der genannten Hochfrequenzkommunikationsverbindung als indirekte Hochfrequenzkommunikationsverbindung, wenn die ersten und zweiten Vektoren unterschiedliche Richtungen aufweisen, oder wenn sie die gleiche Richtung und den gleichen Richtungssinn aufweisen;
und, wenn der erste und der zweite Vektor von gleicher Richtung und entgegengesetztem Richtungssinn sind, konfiguriert zum:
- ausgehend von einem Element, das das von der ersten Vorrichtung empfangene Signal charakterisiert, Bestimmen einer erstem Positionierung der genannten ersten und zweiten Hochfrequenzkommunikationsvorrichtungen in dem genannten gemeinsam verwendeten Bezugssystem;
- ausgehend von einem Element, das das von der zweiten Vorrichtung empfangene Signal charakterisiert, Bestimmen einer zweiten Positionierung der genannten ersten und zweiten Hochfrequenzkommunikationsvorrichtungen in dem genannten gemeinsam verwendeten Bezugssystem;
- im Fall einer Inkohärenz zwischen der ersten und der zweiten Positionierung, Klassifizieren der genannten Hochfrequenzkommunikationsverbindung als indirekte Hochfrequenzkommunikationsverbindung;
- im Fall einer Kohärenz zwischen der ersten und der zweiten Positionierung, Klassifizieren der genannten Hochfrequenzkommunikationsverbindung als direkte Hochfrequenzkommunikationsverbindung;
wobei das genannte Element, das das von der ersten Vorrichtung empfangene Signal charakterisiert, und/oder das genannte Element, das das von der zweiten Vorrichtung empfangene Signal charakterisiert, eine Information ist, die repräsentativ für den Inter-Vorrichtungs-Abstand ist, der die genannten ersten und zweiten Hochfrequenzkommunikationsvorrichtungen trennt.

9. Hochfrequenzkommunikationsvorrichtung, umfassend:
- ein Antennensystem, umfassend mindestens zwei Hochfrequenzantennen, und
- ein Werkzeug zur Erlangung eines Vektors der Ankunftswinkel, der ein empfangenes Hochfrequenzsignal charakterisiert,
wobei die Vorrichtung **dadurch gekennzeichnet ist, dass** sie ferner ein Modul zur Klassifizierung einer Hochfrequenzkommunikationsverbindung nach Anspruch 8 umfasst.

10. Hochfrequenzkommunikationsvorrichtung nach Anspruch 9, wobei das genannte Antennensystem drei im Raum nicht fluchtende Antennen umfasst.

11. Hochfrequenzkommunikationsvorrichtung nach Anspruch 9 oder 10, wobei die genannte Vorrichtung konfiguriert ist, um Ultrabreitband-UWB- oder Langstrecken-LoRa^{®}-Hochfrequenzsignale auszusenden und/oder zu empfangen.

12. System zur Lokalisierung von Hochfrequenzkommunikationsvorrichtungen, **dadurch gekennzeichnet, dass** es Folgendes umfasst:
- eine Gesamtheit von mindestens zwei Kommunikationsvorrichtungen, jeweils umfassend:
- ein Antennensystem, umfassend mindestens zwei Hochfrequenzantennen, und
- ein Werkzeug zur Erlangung eines Vektors der Ankunftswinkel, der ein empfangenes Hochfrequenzsignal charakterisiert;
- mindestens ein elektronisches Modul zur Klassifizierung einer Hochfrequenzkommunikationsverbindung nach Anspruch 8.

## Claims

1. Method (50) for classification of a radiofrequency communication link, as a direct link or as an indirect link, between a first radiofrequency communication device and a second radiofrequency communication device,
each of said first and second devices comprising at least two radiofrequency antennas and a tool for obtaining a vector of angle of arrival characterizing a received radiofrequency signal,
said method being implemented within a system for locating radiofrequency communication devices comprising at least said first radiofrequency communication device, said second radiofrequency communication device, and at least one electronic module for classification of a radiofrequency communication link,
said method comprising the following steps:
- obtaining (52) the orientation of each antenna of said first radiofrequency communication device, and the orientation of each antenna of said second radiofrequency communication device, each orientation being expressed in a reference frame common to said first and second radiofrequency communication devices;
- obtaining (60) a first vector of angle of arrival (62) characterizing the signal received by the first device and transmitted according to said link to be classified by the second device, and a second vector of angle of arrival (64) characterizing the signal received by the second device and transmitted according to said link to be classified by the first device, the first and second vectors of angle of arrival of said radiofrequency signal being expressed in said common reference frame,
- classification (70) of said radiofrequency communication link as an indirect radiofrequency communication link (74) if the first and second vectors are of distinct directions, or if they are of the same direction and of the same sense;
and further comprising the following steps, implemented when the first and second vectors are of the same direction and of opposite sense:
- from an element characterizing the signal received by the first device, determination (78) of a first positioning (80) of said first and second radiofrequency communication devices in said reference frame used in common;
- from an element characterizing the signal received by the second device, determination (78) of a second positioning (82) of said first and second radiofrequency communication devices in said reference frame used in common;
- in the event of inconsistency between the first and the second positioning, classification (70) of said radiofrequency communication link as an indirect radiofrequency communication link (74);
- in the event of consistency between the first and the second positioning, classification (70) of said radiofrequency communication link as a direct radiofrequency communication link (72);
said element characterizing the signal received by the first device and/or said element characterizing the signal received by the second device being information representative of the inter-device distance separating said first and second radiofrequency communication devices.

2. Method (50) according to claim 1, wherein said information representative of the inter-device distance separating said first and second radiofrequency communication devices is obtained from a time of flight associated with said received signal.

3. Method (50) according to any one of the preceding claims, wherein said common reference frame is a two-dimensional or three-dimensional coordinate system shared by the first and the second radiofrequency communication device.

4. Method (50) according to any one of the preceding claims, further comprising the following steps implemented prior to the step of obtaining (52) the orientation of each antenna, and implemented within each of said first and second radiofrequency communication devices:
- the determination (54) of the orientation of their antennas expressed in said common reference frame;
- the transmission (56) of said orientation to said electronic module for classification of a radiofrequency communication link.

5. Method according to claim 4 wherein said determination (54) of the orientation of antenna(s) is implemented using at least one of the elements belonging to the group comprising at least:
- an inertial measurement unit suitable for being embedded within at least one of said first and second radiofrequency communication devices;
- a heading sensor suitable for being embedded within at least one of said first and second radiofrequency communication devices;
- an image sensor suitable for using different reference points associated with an image processing module suitable for implementing simultaneous localization and mapping;
- a GNSS receiver equipped with two GNSS antennas.

6. Method according to any one of claims 1 to 3, wherein the step of obtaining (52) the orientation of each antenna comprises, for at least one of said first and second radiofrequency communication devices, obtaining information representative of said orientation of each antenna of said at least one of said first and second radiofrequency communication devices, said orientation being determined beforehand by fixing (58) in space the position of said at least one of said first and second radiofrequency communication devices.

7. Computer program comprising software instructions which, when they are executed by a computer, implement a method for classification of a radiofrequency communication link, as a direct link or as an indirect link according to any one of the preceding claims.

8. Electronic module for classification of a radiofrequency communication link, as a direct link or as an indirect link, between a first radiofrequency communication device and a second radiofrequency communication device,
each of said first and second devices comprising at least two radiofrequency antennas and a tool for obtaining a vector of angle of arrival characterizing a received radiofrequency signal,
**characterized in that** said electronic module for classification of a radiofrequency communication link is configured to:
- obtain the orientation of each antenna of said first radiofrequency communication device, and the orientation of each antenna of said second radiofrequency communication device, each orientation being expressed in a reference frame common to said first and second radiofrequency communication devices;
- obtain a first vector of angle of arrival characterizing the signal received by the first device and transmitted according to said link to be classified by the second device and a second vector of angle of arrival characterizing the signal received by the second device and transmitted according to said link to be classified by the first device, the first and second vectors of angle of arrival of said radiofrequency signal being expressed in said common reference frame,
- classify said radiofrequency communication link as an indirect radiofrequency communication link if the first and second vectors are of distinct directions, or if they are of the same direction and of the same sense;
and, when the first and second vectors are of the same direction and of opposite sense, configured to:
- from an element characterizing the signal received by the first device, determine a first positioning of said first and second radiofrequency communication devices in said commonly used reference frame;
- from an element characterizing the signal received by the second device, determine a second positioning of said first and second radiofrequency communication devices in said commonly used reference frame;
- in the event of inconsistency between the first and the second positioning, classify said radiofrequency communication link as an indirect radiofrequency communication link;
- in the event of consistency between the first and the second positioning, classify said radiofrequency communication link as a direct radiofrequency communication link;
said element characterizing the signal received by the first device and/or said element characterizing the signal received by the second device being information representative of the inter-device distance separating said first and second radiofrequency communication devices.

9. Radiofrequency communication device comprising:
- an antenna system comprising at least two radiofrequency antennas, and
- a tool for obtaining a vector of angle of arrival characterizing a received radiofrequency signal,
the device being **characterized in that** it further comprises a module for classification of a radiofrequency communication link according to claim 8.

10. Radiofrequency communication device according to claim 9, wherein said antenna system comprises three antennas not aligned in space.

11. Radiofrequency communication device according to claim 9 or 10, wherein said device is configured to transmit and/or receive Ultra-Wideband UWB or long-range LoRa^{®} radiofrequency signals.

12. System for localizing radiofrequency communication devices **characterized in that** it comprises:
- a set of at least two communication devices each comprising:
- an antenna system comprising at least two radiofrequency antennas, and
- a tool for obtaining a vector of angle of arrival characterizing a received radiofrequency signal;
- at least one electronic module for classification of a radiofrequency communication link according to claim 8.
